**Europäisches Patentamt**

**European Patent Office**

**Office européen des brevets**

(19)

(11) Veröffentlichungsnummer: **0 276 484**

**A1**

## (12) EUROPÄISCHE PATENTANMELDUNG

(21) Anmeldenummer: **87119338.9**

(22) Anmeldetag: **29.12.87**

(51) Int. Cl.4: **F24J 2/14**

(30) Priorität: **30.12.86 DE 3644759**

(43) Veröffentlichungstag der Anmeldung:
**03.08.88 Patentblatt 88/31**

(84) Benannte Vertragsstaaten:
**AT BE CH DE ES FR GB GR IT LI LU NL SE**

(71) Anmelder: **Erwin Sick GmbH Optik-Elektronik**
**Sebastian-Kneipp-Strasse 1**
**D-7808 Waldkirch(DE)**

(72) Erfinder: **Sick, Erwin, Dr.**
**Stifterweg 6**
**D-8021 Icking(DE)**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Solarspiegelanordnung.**

(57) Eine Solarspiegelanordnung weist ein längliches Traggestell auf, an dem elastisch biegsame Spiegelbleche (15) in parabelförmig gebogener Anordnung und in der Brennlinie der Spiegelbleche (15) ein länglicher Solarstrahlungsempfänger (28) befestigt sind. Das Traggestell ist um eine parallel zur Parabelachse verlaufende Achse verschwenkbar. Das Traggestell weist zwei im Abstand gegenüber und parallel zueinander angeordnete Klemmprofilträger (11) auf, die an ihren einander zugekehrten Seiten die Enden von sich zwischen ihnen erstreckenden Parabelstegen (12), auf deren konkaver Parabelkante (17) die Spiegelbleche (15) formschlüssig angeordnet sind, um parallel zu ihrer Längsachse (13) verlaufende Schwenkachsen (14) verschwenkbar tragen und auf der der Parabelkante (17) zugewandten Seite der Schwenkachse (14) in einem Abstand von dieser einen länglichen, sich parallel zur Schwenkachse (14) erstreckenden Stauchanschlag (16) aufweist. An dem Stauchanschlag liegen die Endkanten der Spiegelbleche (15) an, wodurch die Spiegelbleche (15) gegen die Parabelkanten (17) der Parabelstege (17) gespannt gehalten sind.

FIG. 4

## Solarspiegelanordnung

Die Erfindung betrifft eine Solarspiegelordnung mit einem länglichen Traggestell, an dem elastisch biegsame Spiegelplatten, insbesondere Spiegelbleche, in parabelförmig gebogener Anordnung und in der Brennlinie der Spiegelplatten ein länglicher Solarstrahlungsempfänger befestigt sind und welches um eine parallel zur Zylinderachse verlaufende Achse verschwenkbar ist.

Derartige Solarspiegelanordnungen werden insbesondere in sonnenreichen Ländern zur Solarenergiegewinnung herangezogen. Um möglichst große Energiemengen zu erzeugen, sind großflächige Spiegelanordnungen erforderlich. Deren Herstellung ist jedoch mit einem erheblichen Aufwand verbunden.

Das Ziel der Erfindung besteht somit darin, eine Solarspiegelanordnung der eingangs genannten Gattung zu schaffen, mit der großflächige Sonnenlichtempfangsflächen in möglichst guter optischer Qualität und geringem Gewicht verwirklicht werden können, ohne daß der Aufwand für die Herstellung der Solarspiegelanordnung übermäßig hoch wird. Insbesondere sollen so weit wie möglich auf dem Markt befindliche und preiswerte Bauteile verwendet werden, ohne daß insbesondere die optische Qualität der Spiegelanordnung, d.h. die Exaktheit der Konzentration des Sonnenlichts auf den Strahlungsempfänger beeinträchtigt wird. Außerdem sollen die Spiegelplatten im Falle der Beschädigung, der Verschmutzung oder einer sonstigen Beeinträchtigung auf einfache Weise ausgewechselt und durch neue ersetzt werden können. Im Betrieb soll die Solarspiegelanordnung auch über lange Betriebszeiten hinweg und auch bei erheblichen Temperaturunterschieden zwischen Tag und Nacht stabil und betriebssicher sein.

Zur Lösung dieser Aufgabe sieht die Erfindung vor, daß das Traggestell zwei im Abstand gegenüber und parallel zueinander angeordnete Klemmprofilträger aufweist, die an ihren einander zugekehrten Seiten die Enden von sich zwischen ihnen erstrekkenden Zylinderstegen, auf deren konkaver Parabelkante die Spiegelplatten formschlüssig angeordnet sind, um parallel zu ihrer Längsachse verlaufende Schwenkachsen verschwenkbar tragen und auf der der Parabelkante zugewandten Seite der Schwenkachse in einem Abstnad von dieser einen länglichen, sich parallel zur Schwenkachse erstreckenden Stauchanschlag aufweist, an dem die Endkanten der Spiegelplatte anliegen, wodurch die Spiegelplatte gegen die Parabelkante gespannt gehalten ist, und daß durch Lösung und Verschwenkung des bzw. der Klemmprofilträger um die Schwenkachse der Stauchanschlag von der Endkante entfernbar ist.

Der Erfindungsgedanke ist also darin zu sehen, daß als Spiegelplatten elastisch biegsame Gebilde, insbesondere Spiegelbleche verwendet werden, die von Haus aus noch keine irgendwie definierte Oberflächenform besitzen. Die Parabelfläche wird erfindungsgemäß vielmehr durch die Parabelkanten der sehr schmalen Parabelstege verwirklicht, die in geeigneten Abständen nebeneinander am Traggestell angeordnet sind und gegen deren Parabelkante die Spiegelplatten im Sinne einer Stauchung derart angedrückt werden, daß die Spiegelplatten formschlüssig an den Parabelkanten der Parabelstege anliegen. Um dieses formschlüssige Anliegen auf einfache Weise herbeiführen zu können, d.h. die Montage und Demontage der Spiegelplatten so einfach wie möglich durchführen zu können, werden die Klemmprofilträger verwendet, welche ein einfaches Einlegen der zunächst nur grob parabelförmig gebogene Spiegelplatten ermöglichen, wobei dann während der anschließenden Verschwenkung der Klemmprofilträger die Stauchung der Spiegelplatten und die formschlüssige Anlage an die Parabelkanten der Parabelstege erfolgt, welche ihrerseits vorher mit den Klemmprofilträgern verschwenkbar verbunden worden sind. Beim Einlegen der nicht vorgebogenen Spiegelplatten werden diese aufgrund ihres Eigengewichts in eine vorläufige Parabelform gebogen.

Eine praktische Realisierung des Erfindungsgedankens sieht vor, daß der Klemmprofilträger im wesentlichen eine hohle zylindrische Grundform besitzt und auf der die Spiegelplatte abstützenden Seite einen nutartigen Ausschnitt aufweist, dessen eine Eckkante den Stauchanschlag bildet. Hierbei soll ins besondere vorgesehen sein, daß der Klemmprofilträger auf der die Spiegelfläche abstützenden Seite einen Längsschlitz aufweist, in dem ein die Schwenkachse definierendes Drehlager tragende Schieber längsverschiebbar gehalten sind. Bevorzugt befindet sich der Längsschlitz in der Mitte des nutartigen Ausschnittes an dessen Grund.

Es ist weiter vorteilhaft, wenn die Schieber in jeder Stellung entlang des Klemmprofilträgers feststellbar sind. Auf diese Weise können die Schieber nach der Montage der Klemmprofilträger an diejenigen Stellen verschoben und dort festgestellt werden, wo die Parabelstege zur Abstützung der Spiegelplatten angeordnet werden sollen.

Eine praktische Ausführungsform kennzeichnet sich dadurch, daß in das Drehlager ein mit den Enden eines Parabelsteges verbundener Schwenkzapfen eingreift. Hierbei ist es insbesondere zweckmäßig, wenn das Drehlager und der Schwenkzapfen im wesentlichen in Richtung der Tangente der Parabelfläche an dieser Stelle in derjenigen Richtung gegeneinander verspannbar sind, in der die Endkante der Spiegelplatte mehr oder weniger gegen den Stauchanschlag drückbar ist. Auf diese Weise ist noch eine Feinjustierung der Anordnung der Enden der Parabelstege relativ zu den Klemmprofilträgern möglich, wobei diese Relativverspannung am zweckmäßigsten durch eine in das Drehlager eingedrehte Justierschraube erfolgt.

Da jeder einzelne Parabelsteg für sich insbesondere gegen Biegung in der Ebene noch ein relativ unstabiles Gebilde ist, sieht eine Weiterbildung der Erfindung vor, daß je zwei im Abstand angeordnete benachbarte Parabelstege durch Verbindungsstege zu einer Baueinheit verbunden sind. Hierdurch werden kastenartige Profilgebilde geschaffen, die für sich eine sehr große innere Stabilität aufweisen, die dann durch die Anbringung an den Klemmprofilträgern noch erhöht wird. Stabilisiert werden die Parabelstege und die Spiegelplatten durch die gegenseitige Verspannung über die Klemmprofilträger.

Eine besonders zweckmäßige bauliche Ausführungsform kennzeichnet sich dadurch, daß die beiden Klemmprofilträger an ihren beiden Enden durch Verbindungsträger zu einem Rahmen ergänzt sind, wobei die Verbindung zwischen dem Klemmprofilträger und den Verbindungsträgern lösbar und derart gestaltet ist, daß die Klemmprofilträger um die Schwenkachse wahlweise in die Löse-oder Spannstellung verschwenkbar sind.

Eine weitere vorteilhafte Ausführungsform kennzeichnet sich dadurch, daß die Klemmprofilträger mit ihren Enden gegebenenfalls über die Verbindungsträger diametral an steifen Kreisringen befestigt sind, deren Achsen parallel zur Parabelachse verlaufen und deren Durchmesser im wesentlichen dem Abstand der beiden Klemmprofilträger entspricht. Hierbei ist es besonders zweckmäßig, wenn die Kreisringe auf Laufrollen gelagert sind un um ihre gemeinsame Achse gesteuert verdrehbar sind. Die steifen Kreisringe werden also gleichzeitig zur Halterung der Solarspiegelanordnung als auch zu deren gesteuerter Verdrehung herangezogen. Durch die gesteuerte Verdrehung wird dafür gesorgt, daß die Sonnenstrahlung zu jedem Zeitpunkt in optimaler Richtung exakt von vorn auf die Solarspiegelanordnung einfällt, so daß die Solarenergie weitgehend auf den in der Brennlinie sitzenden Strahlungsempfänger konzentriert wird. Letzterer ist zweckmäßig an den Kreisringen gegenüber den Spiegelplatten befestigt.

Da der exakte Zuschnitt der Parabelkanten der Parabelstege keine technischen Probleme aufwirft, ist es ohne weiteres möglich, daß nach einer besonders bevorzugten Ausführungsform die Parabelkante der Parabelstege parabelförmig ausgebildet ist. Mit der Erfindung können also das Sonnenlicht besonders exakt auf den Strahlungsempfänger konzentrierende Parabelspiegel verwirklicht werden.

Die Erfindung wird im folgenden beispielsweise anhand der Zeichnung beschrieben; in dieser zeigt

Fig. 1 eine schematische perspektivische Gesamtansicht einer erfindungsgemäßen Solarspiegelanordnung,

Fig. 2 eine schematische Schnittansicht im wesentlichen nach Linie II-II in Fig. 1,

Fig. 3 eine schematische Ansicht der erfindungsgemäßen Solarspiegelanordnung in Richtung des Pfeiles III in Fig. 2,

Fig. 4 den Ausschnitt IV aus Fig. 2 in vergrößertem Maßstab,

Fig. 5 den Ausschnitt V in Fig. 4 zur Veranschaulichung der für die Funktion wesentlichen Bauteile in abermals vergrößertem Maßstab, wobei der Klemmprofilträger gestrichelt in der Lösestellung und in ausgezogenen Linien in der Klemmstellung wiedergegeben ist,

Fig. 6 eine Ansicht des Gegenstandes der Fig. 4 in Richtung des Pfeiles VI in Fig. 4, wobei die Spiegelplatte 15 teilweise weggebrochen ist, und

Fig. 7 eine schematische Seitenansicht einer aus mehreren Einheiten zusammengesetzten Solarspiegelanordnung gemäß der Erfindung.

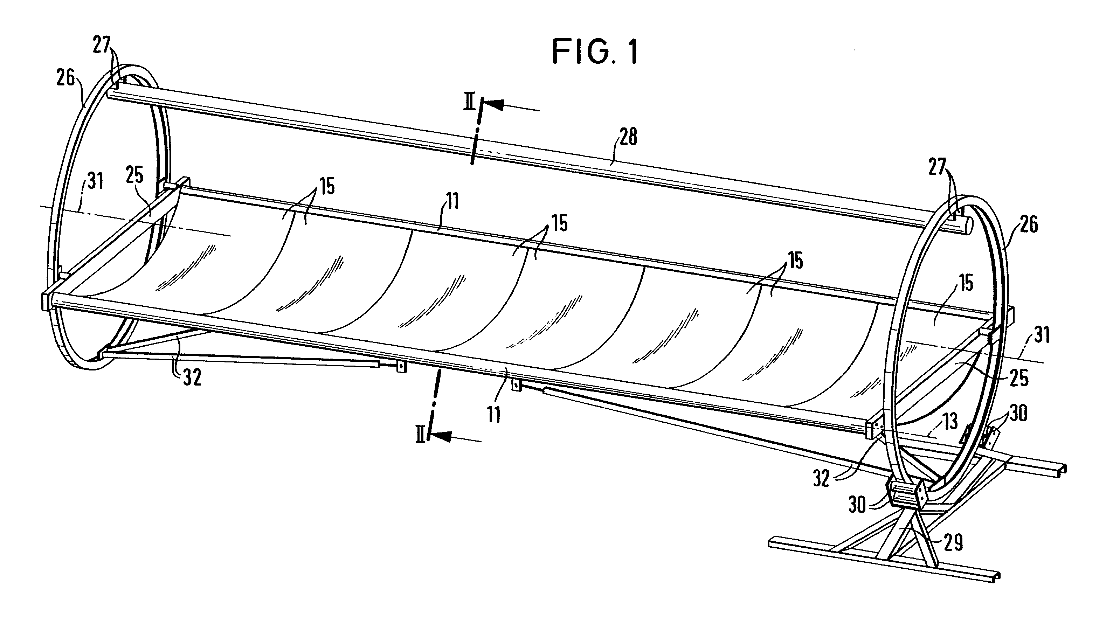

Nach Fig. 1 sind an den Stirnenden einer erfindungsgemäßen Solarspiegelanordnung Grundgestelle 29 vorgesehen, von denen in Fig. 1 nur das an der rechten Stirnseite vorgesehene dargestellt ist. Diese Grundgestelle 29 sind auf dem Erdboden angeordnet. Auf den Grundgestellen 29 sind in einem Umfangsabstand Kunststoffrollen 30 mit horizontaler Drehachse drehbar befestigt, auf denen ein aus Stahl bestehender Kreisring 26 um seine horizontal verlaufende Mittelachse 31 verdrehbar aber axial geführt gelagert ist. Der Drehantrieb eines der Kreisringe 26 kann in nicht dargestellter Weise durch einen mittels eines Ge triebes stark untersetzten Elektromotor erfolgen, oder über eine Transmission auf den Umfang des Kreisringes 26 einwirkt.

In halber Höhe der Kreisringe 26 sind horizontal Verbindungsträger 25 befestigt, die sich diametral durch die Kreisringe 26 erstrecken und mit ihren etwas über die Kreisringe 26 nach außen vorspringenden Enden längliche Klemmprofilträger 11 tragen, die sich vom Verbindungsträger 25 des einen Kreisrings 26 zum Verbindungsträger 25 des mit erheblichem axialen Abstand davon angeordneten parallelen Kreisringes 26 erstrecken. Zwischen den beiden parallel zueinander verlaufenden Klemmprofilträgern 11 sind in parabolisch gekrümmter Form dünne und elastisch biegsame Spiegelbleche 15 in der im folgenden näher beschriebenen Weise angeordnet. Zwischen den beiden in Fig. 1 dargestellten Kreisringen 26 befinden sich in unmittelbarer Anlage nebeneinander bzw. an den Verbindungträgern 25 insgesamt sieben Spiegelbleche 15, die im nicht gekrümmten Zustand eine Rechteckform aufweisen, wobei die längere Seite des Rechtecks in der späteren Umfangsrichtung verläuft.

Von den unteren Bereichen der Kreisringe 26 erstrecken sich Versteifungsstreben 32 zu den mittleren Bereichen der beiden Klemmprofilträger 11, um eine möglichst biegungs-und verbindungssteife Gesamtanordnung zu schaffen.

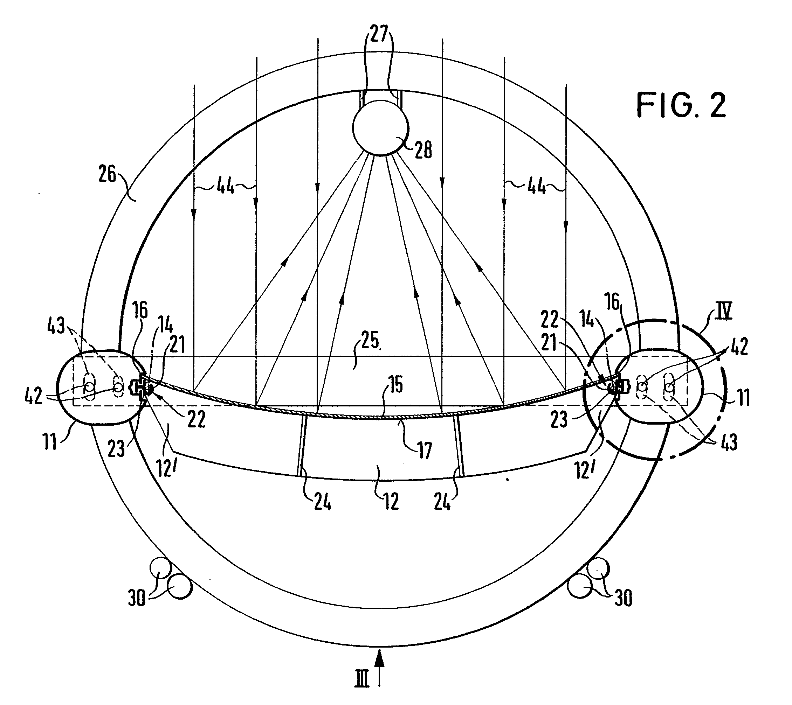

Nach den Fig. 2 bis 4 sind hinter den Spiegelblechen 15 Parabelstege 12 angeordnet, welche jeweils eine den Spiegelblechen 15 zugewandte Parabelkante 17 besitzen. Die Parabelstege 12 und ihre Parabelkanten 17 erstrecken sich in Umfangsrichtung der Spiegelbleche 15.

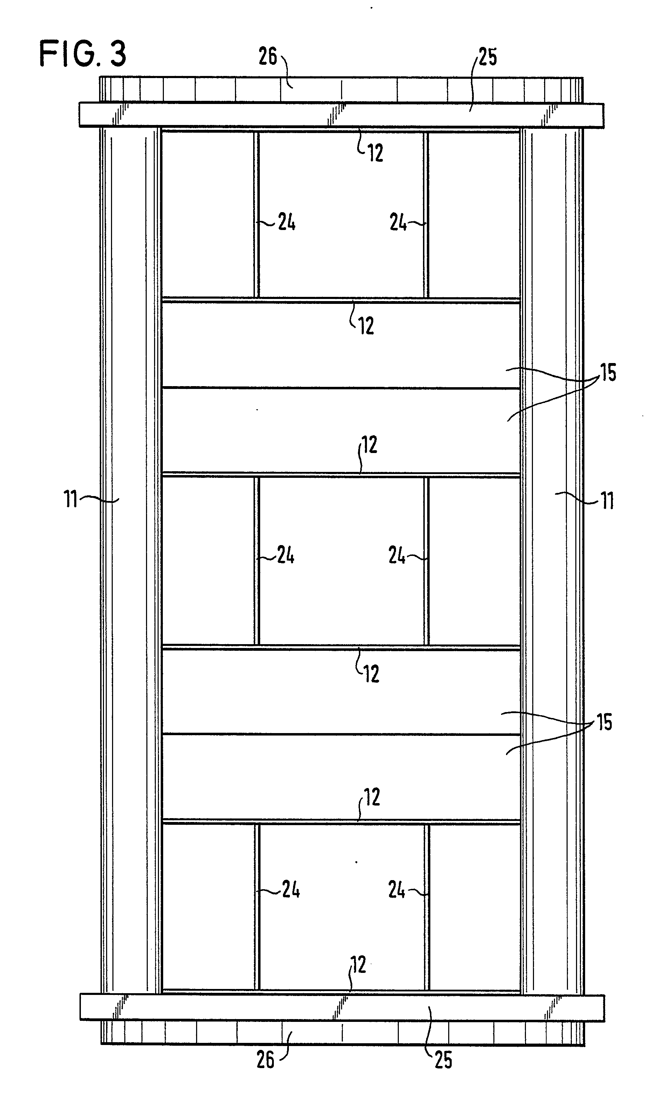

In Fig. 3 sind im Gegensatz zu Fig. 1 der Einfachheit halber nur drei nebeneinander angeordnete Spiegelbleche 15 dargestellt. Gleiche Bezugszahlen bezeichnen in allen Ausführungsbeispielen entsprechende Bauteile.

Nach Fig. 3 sind jeweils zwei im Abstand nebeneinander angeordnete Parabelstege 12 durch in Längsrichtung der Anordnung verlaufende Verbindungsstege 24 zu einer größeren Baueinheit miteinander verbunden. Nach Fig. 3 sind im Abstand nebeneinander drei derartige Baueinheiten vorgesehen. Die ebenen Flächen der Parabelstege 12 und der Verbindungsstege 24 stehen senkrecht auf den parabolzylindrisch gekrümmten Spiegelflächen 15.

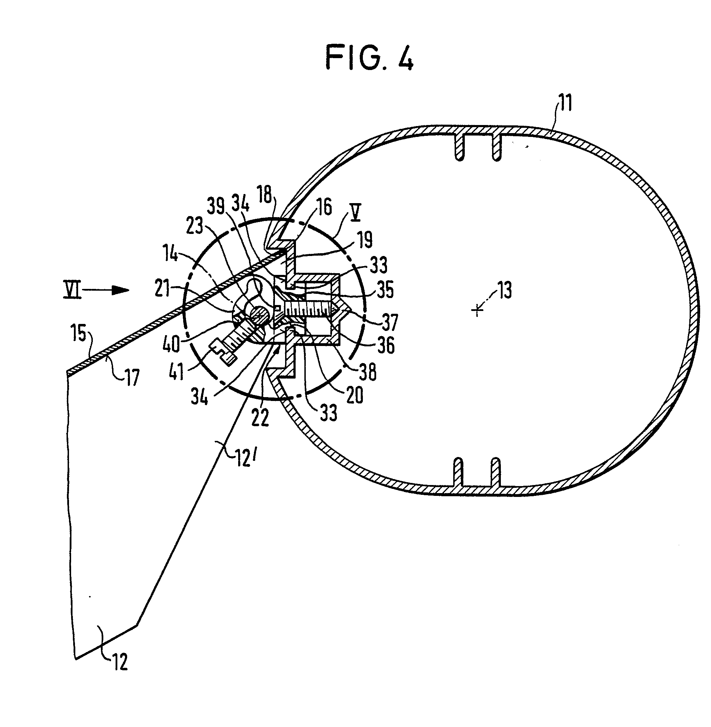

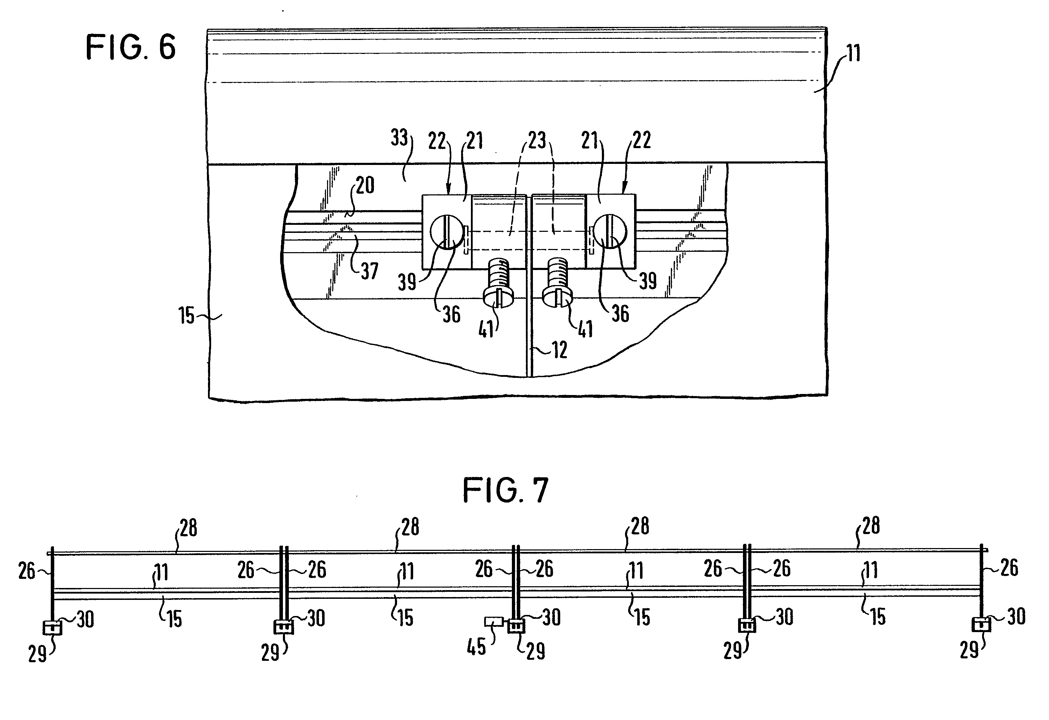

Gemäß den Fig. 2 und 4 ist in den sich spitzwinklig verjüngenden Enden 12' jedes Parabelsteges 12 ganz am Ende eine sich parallel zur Parabelachse erstreckender Schwenkzapfen 23 angeordnet, welcher gemäß Fig. 6 beidseitig über jeden Parabelsteg 12 vorsteht und in beidseitig jedes Parabelsteges 12 vorgesehene Drehlager 21 eingreift, die an Schiebern 22 vorgesehen sind, welche in den Klemmprofilträgern 11 in Längsrichtung verschiebbar angeordnet sind. Die Klemmprofilträger 11 weisen zu diesem Zweck nach Fig. 4 einen nutartigen Ausschnitt 19 auf, in dessen Grund ein Längsschlitz 20 vorgesehen ist. Die Berandungsstege 33 dieses Längsschlitzes 20 werden von Führungsnuten 34 des Schiebers 22 im Gleitsitz umgriffen, derart, daß die Schieber 22 allseits sicher am Klemmprofilträger 11 gehalten, jedoch in Längsrichtung verschiebbar sind. Die eine Hälfte dieses Schiebers 21 weist eine Gewindebohrung 35 auf, in welche eine Klemmschraube 36 eingeschraubt ist, deren Ende gegen den Boden 37 eines am Klemmprofilträger 11 vorgesehenen Klemmsteges 38 gedrückt werden kann. Die Schraube weist in ihrem Kopf einen Schraubenzieherschlitz 39 auf, mittels dessen die Schraube durch einen Schraubenzieher betätigt und gegen den Boden 37 des Klemmsteges 38 geklemmt werden kann, wenn der Schieber 22 an einer bestimmten Stelle der Längs ausdehnung des Klemmprofilträgers 11 festgelegt werden soll.

Neben der Gewindebohrung 35 ist an jedem Schieber 22 das Drehlager 21 angeformt, welches sich bis etwas über den Außenumfang des Klemmprofilträgers 11 in Richtung auf die Spiegelbleche 15 erstreckt und dort den Schwenkzapfen 23, der durch die Parabelstege 12 gesteckt ist, umgreift. Auf der Innenseite jedes Drehlagers befindet sich eine annäherd tangential zur Parabelfläche an dieser Stelle gerichtete Gewindebohrung 40, durch die ein Justierbolzen 41 geschraubt ist, der sich mit seinem Ende auf dem Außenumfang des Schwenkzapfens 23 abstützt. Optimal wäre eine Gewindebohrung, die normal zur gedachten Verbindungslinie der beiden gegenüberliegenden Bohrungen eines Parabelstegs liegt, um nachträglich keine Verspannungen (Kräfte) des Parabelstegs herbeizuführen. Die Gewindebohrung ist aufgrund der geometrischen Form des Klemmprofils herbeizuführen.

Die Anordnung der Parabelstege 17 mittels der Schwenkzapfen 23 an dem Drehlager 21 des Schiebers 22 ist derart, daß die Tangente der Parabelkante 17 im Endbereich jedes Parabelstegs 12 im wesentlichen in der oberen Eckkante des nutartigen Ausschnittes 19 mündet. Auf diese Weise ist es möglich, daß die Endkanten 18 der auf die Parabelkanten 17 der Parabelstege 12 gekrümmt aufgelegten Spiegelbleche 15 sich in diese Eckkante hineinlegen, welche somit einen Stauchanschlag 16 für die Endkanten 18 bildet.

Erfindungsgemäß ist nach Fig. 6 jeder Parabelsteg 12 von zwei spiegelsymmetrisch zueinander ausgebildeten Schiebern 21 umgeben, welche den Parabelsteg 12 zwischen sich einspannen und gleichzeitig seine auf den Spiegelflächen 15 senkrechte Lage fixieren.

Nach Fig. 2 sind die Klemmprofilträger 11 mit ihren Stirnenden an den Verbindungsträgern 25 um die Schwenkachse 14 der Schwenkzapfen 23 verschwenkbar gelagert. Hierzu können an den Stirnenden der Klemmprofilträger 11 nur schematisch angedeutete Befestigungszapfen 42 vorgesehen sein, die in um die Schwenkachse 14 herum gekrümmte, gestrichelt dargestellte Langlöcher 43 in den Verbindungsträgern 25 eingreifen und durch nicht dargestellte Bolzen in einer bestimmten Schwenklage relativ zu den Verbindungsträgern 25 fixierbar sind.

Durch Lösung der an den Bolzen 42 angeordneten, nicht dargestellten Muttern können die Klemmprofilträger 11 um die Schwenkachse 14 verschwenkt werden.

Gegenüber den Verbindungsträgern 25 und den Spiegelblechen 15 ist nach Fig. 1 ein länglicher Strahlungsempfänger 28 angeordnet, der über Befestigungsstege 27 an den beiden im Abstand angeordneten steifen Kreisringen 26 befestigt ist.

Nach Fig. 2 wird das parallel und von vorn auf die Spiegelbleche 25 auftreffende Sonnenlicht 44 in der Brennlinie der Spiegelbleche 25 konzentriert, wo der Strahlungsempfänger 28 angeordnet ist.

Nach Fig. 4 erstreckt sich die Schwenkachse 14 jedes Klemmprofilträgers 11 parallel zu dessen Längsachse 13.

Die Montage der erfindungsgemäßen Solarspiegelanordnung geht wie folgt vor sich:

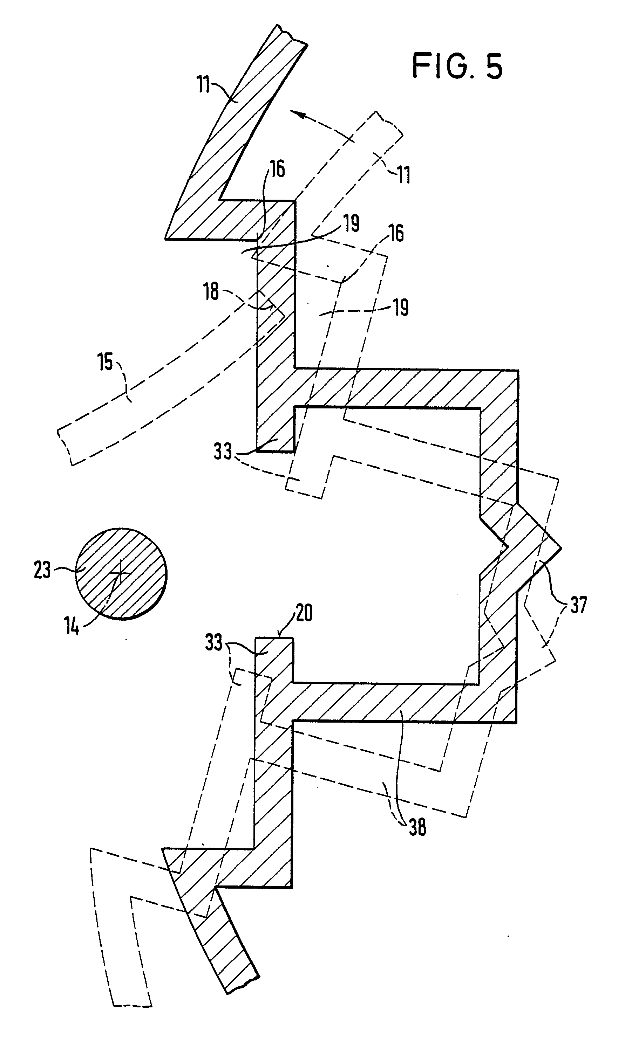

Nachdem sämtliche Bauteile mit Ausnahme der Spiegelbleche 15 in der aus Fig. 1 ersichtlichen Weise zusammengebaut worden sind, werden die Klemmprofilträger 11 durch Lösung der Befestigungsmuttern im Bereich der Verbindungsträger 25 relativ zu diesem gelockert, so daß sie um die Schwenkachse 14 gemäß Fig. 5 in die gestrichelt dargestellte Öffnungsposition verschwenkt werden können. Diese Verschwenkung erfolgt in der Weise, daß sich der Stauchanschlag 16 von den Endkanten 18 der Spiegelbleche 15 entfernt.

Nunmehr werden die Spiegelbleche 15 auf die Parabelkanten 17 der Parabelsegmente 12 aufgelegt, wobei sie in etwa die aus Fig. 5 ersichtliche gestrichelte Position einnehmen, in welcher die Endkanten 15 noch einen gewissen geringen Abstand von den Stauchanschlägen 16 aufweisen, so daß das Einlegen problemlos durchgeführt werden kann. Sobald auf diese Weise sämtliche Spiegelbleche 15 unmittelbar nebeneinander liegen auf den vorher in geeigneten Abständen montierten Zylindersegmenten 12 aufgelegt sind, werden die Klemmprofilträger 11 in Richtung des gestrichelten Pfeiles in Fig. 5 verschwenkt, wobei die Stauchanschläge 16 mit den Endkanten 18 der Spiegelbleche 15 in Berührung kommen, so daß beim weiteren Verschwenken in die in Fig. 5 ausgezogenen Linien dargestellte Spannstellung die Spiegelbleche 15 fest und formschlüssig an die Parabelkante 17 der Zylinderstege 12 angedrückt werden. Auf diese Weise nehmen die in sich biegsamen und keine definierte Form aufweisenden Spiegelbleche 15 exakt die Krümmungsform der Parabelkanten 17 der Zylinderstege 12 an, welche zweckmäßig eine Parabel darstellt. In der in Fig. 5 in ausgezogenen Linien und in den übrigen Figuren dargestellten Spannstellung der Klemmprofilträger 11 werden diese durch Anziehen der Muttern an der Verbindungsstelle zu den Verbindungsträgern 25 in der Spannstellung fixiert, so daß nunmehr eine exakt ausgerichtete und optisch einwandfreie Parabel-Spiegelanordnung vorliegt.

Sollte im Bereich des einen oder anderen Schiebers 21 noch eine gewisse Fehlausrichtung zwischen den Parabelstegen 12 und dem Klemmprofilträger 11 vorliegen, so kann diese durch Verdrehen der entsprechenden Justierschraube 41 problemlos und exakt beseitigt werden.

Die Demontage geht in umgekehrten Sinne vor sich.

Die Montage der Parabelstege 12 ist entsprechend einfach. Die zu größeren Baueinheiten gemäß Fig. 3 zusammengebauten Parabelstege 12 werden in die nach oben vorzugsweise offenen Drehlager 21 mittels der Schwenkzapfen 23 eingehängt, wobei die Gesamtanordnungen durch seitliches Verschieben der Schieber 21 exakt in die richtige Position gebracht werden können. Die Schieber 21 werden dann von beiden Seiten an die zugeordneten Parabelstege 12 angedrückt und in dieser Lage durch die Schrauben 36 fixiert. Die Feinjustierung kann dann durch Verdrehen der Justierschrauben 41 erfolgen.

Nach Fig. 7 können mehrere Solarspiegelanordnungen gemäß Fig. 1 hintereinander angeordnet und miteinander auf geeignete Weise drehgekuppelt sein. Es genügt auf diese Weise ein einzelner Motor 45 zum Antrieb sämtlicher gekuppelter Solarspiegelanordnungen.

Grundsätzlich könnten die Stege 12 auch etwas von der Parabelform abweichen und z.B. annähernd kreisförmig sein, wenn nur der überwiegende Teil der Sonnenstrahlung auf den Strahlungsempfänger 28 fällt.

## Ansprüche

1. Solarspiegelanordnung mit einem länglichen Traggestell, an dem elastisch biegsame Spiegelplatten, insbesondere Spiegelbleche, in parabelförmig gebogener Anordnung und in der Brennlinie der Spiegelplatten ein länglicher Solarstrahlungsempfänger befestigt sind und welche um eine parallel zur Parabelbrennlinie verlaufende Achse verschwenkbar ist, dadurch **gekennzeichnet,** daß das Traggestell zwei im Abstand gegenüber und parallel zueinander angeordnete Klemmprofilträger (11) aufweist, die an ihren einander zugekehrten Seiten die Enden von sich zwischen ihnen erstreckenden Parabelstegen (12), auf deren konkaver Parabelkante (17) die Spiegelplatten (15) formschlüssig angeordnet sind, um parallel zu ihrer Längsachse (13) verlaufende Schwenkachsen (14) verschwenkbar tragen und auf der der Parabelkante (17) zugewandten Seite der Schwenkachse (14) in einem Abstand von dieser einen länglichen, sich parallel zur Schwenkachse (14) erstreckenden Stauchanschlag (16) aufweist, an dem die Endkanten (18) der Spiegelplatte (15) anliegen, wodurch die Spiegelplatte (15) gegen die Parabelkante (17) gespannt gehalten ist, und daß durch Lösung und Verschwenkung des bzw. der Klemmprofilträger (11) um die Schwenkachse (14) der Stauchanschlag (16) von der Endkante (18) entfernbar ist.

2. Solarspiegelanordnung nach Anspruch 1, dadurch **gekennzeichnet,** daß der Klemmprofilträger (11) im wesentlichen eine hohle parabelförmige Grundform besitzt und auf der die Spiegelplatte (15) abstützenden Seite einen nutartigen Ausschnitt (19) aufweist, dessen eine Eckkante den Stauchanschlag (16) bildet.

3. Solarspiegelanordnung nach Anspruch 1 oder 2, dadurch **gekennzeichnet,** daß der Klemmprofilträger (11) auf der die Spiegelfläche (15) abstützenden Seite einen Längsschlitz (20) aufweist, in dem ein die Schwenkachse (14) definierendes Drehlager (21) tragende Schieber (22) längsverschiebbar gehalten sind.

4. Solarspiegelanordnung nach Anspruch 3 , dadurch **gekennzeichnet,** daß die Schieber (22) in jeder Stellung entlang des Klemmprofilträgers feststellbar sind.

5. Solarspiegelanordnung nach Anspruch 3 oder 4, dadurch **gekennzeichnet,** daß in das Drehlager (21) ein mit den Enden eines Parabelsteges (17) verbundener Schwenkzapfen (23) eingreift, wobei insbesondere das Drehlager (21) und der Schwenkzapfen 23 im wesentlichen in Richtung der Tangente der Parabelfläche an dieser Stelle in derjenigen Richtung gegeneinander verspannbar sind, in der die Endkante (18) der Spiegelplatte (15) mehr oder weniger gegen den Stauchanschlag (16) drückbar ist.

6. Solarspiegelanordnung nach einem der vorhergehenden Ansprüche, dadurch **gekennzeichnet,** daß je zwei im Abstand angeordnete benachbarte Parabelstege (12) durch Verbindungsstege (24) zu einer Baueinheit verbunden sind.

7. Solarspiegelanordnung nach einem der vorhergehenden Ansprüche, dadurch **gekennzeichnet,** daß die beiden Klemmprofilträger (11) an ihren beiden Enden durch Verbindungsträger (25) zu einem Rahmen ergänzt sind, wobei die Verbindung zwischen dem Klemmprofilträger (11) und den Verbindungsträgern (25) lösbar und derart gestaltet ist, daß die Klemmprofilträger (11) um die Schwenkachse (14) wahlweise in die Löse-oder Spannstellung verschwenkbar sind.

8. Solarspiegelanordnung nach einem der vorhergehenden Ansprüche, dadurch **gekennzeichnet,** daß die Klemmprofilträger (11) mit ihren Enden gegebenenfalls über die Verbindungsträger (25) diametral an steifen Kreisringen (26) befestigt sind, deren Achsen parallel zur Parabelachse verlaufen und deren Durchmesser im wesentlichen dem Abstand der beiden Klemmprofilträger (11) entspricht, wobei insbesondere die Kreisringe (26) auf Laufrollen (27) gelagert und um ihre gemeinsame Achse gesteuert verdrehbar sind.

9. Solarspiegelanordnung nach Anspruch 8, dadurch **gekennzeichnet,** daß der Strahlungsempfänger (28) an den Kreisringen (26) gegenüber den Spiegelplatten (15) befestigt ist.

10. Solarspiegelanordnung nach einem der vorhergehenden Ansprüche, dadurch **gekennzeichnet,** daß biegsame Trageplatten (z.B. Stahlblech) mit reflektierender Folie belegt sind.

# FIG. 1

0 276 484

FIG. 2

0 276 484

FIG. 3

FIG. 4

FIG. 5

## FIG. 6

## FIG. 7

0 276 484

| | | |
|---|---|---|
| **Europäisches Patentamt** | **EUROPÄISCHER RECHERCHENBERICHT** | Nummer der Anmeldung |
| | | EP 87 11 9338 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 015 487 (NIHON CHEMICAL PLANT CONSULTANT CO. LTD) * Seite 4, Zeile 3 - Seite 6, Zeile 25; Figuren 1-4 * --- | 1,6,10 | F 24 J 2/14 |
| A | US-A-4 390 241 (TRIHEY) * Spalte 2, Zeile 9 - Spalte 4, Zeile 10; Figuren 1-9 * --- | 1 | |
| A | US-A-4 106 484 (DAME) * Spalte 1, Zeile 51 - Spalte 2, Zeile 56; Figuren 1-7 * --- | 1,2,7 | |
| A | US-A-4 359 041 (SNODGRASS) * Spalte 4, Zeile 22 - Spalte 5, Zeile 53; Spalte 8, Zeilen 42-52; Figuren 1-3 * --- | 1 | |
| A | US-A-4 106 480 (LYON et al.) * Spalte 3, Zeilen 36-66; Figuren 1-3 * --- | 1 | |
| A | US-A-4 136 671 (WHITEFORD) * Spalte 2, Zeile 38 - Spalte 3, Zeile 33; Figuren 1-3 * ----- | 1,8,9 | **RECHERCHIERTE SACHGEBIETE (Int. Cl.4)** F 24 J |

Der vorliegende Recherchenbericht wurde für alle Patentansprüche erstellt

| Recherchenort | Abschlußdatum der Recherche | Prüfer |
|---|---|---|
| DEN HAAG | 22-03-1988 | BELTZUNG F.C. |